# EUROPEAN PATENT APPLICATION

(11) **EP 3 588 844 A1**
(43) Date of publication of application: **01.01.2020**
(21) Application number: 18382474.7
(22) Date of filing: 26.06.2018
(51) Int. Cl.: H04L 9/32

(54) **METHOD FOR MONITORING DIGITAL CERTIFICATES**

(71) Applicant: BBVA Next Technologies, S.L., 28036 Madrid (ES)
(72) Inventor: MUÑOZ MUÑOZ, Alfonso, E-28036 Madrid (ES); GONZÁLEZ NOVILLO, Ruth, E-28036 Madrid (ES); CUADRADO SAEZ, Jorge, E-28036 Madrid (ES)
(74) Representative: ABG Intellectual Property Law, S.L.

(57) **Abstract**

The present invention relates to a computer-implemented method for monitoring, registering, and validating digital certificates in a private computer network not connected to the Internet.

## Description

### Object of the Invention

The present invention relates to a computer-implemented method for monitoring, registering, and validating digital certificates in a private computer network not connected to the Internet.

### Background of the Invention

Digital certificates are an essential piece in secure communications today in terms of confidentiality, authentication, and authorization. Although it has been subjected to significant development in the past few decades, this field still has a series of important challenges it must overcome, such as security against theft and falsifications, the reduction of management and distribution costs, the compatibility of communications protocols, and the verification of said digital certificates in scenarios not connected to the Internet.

The standard solution for managing digital certificates are *public key infrastructures (PKI),* which have two different types of authorities, that is, a *CA (certification authority)* and an *RA (registration authority).* The person or software, i.e., a client in a client-server system, that has to verify the legitimacy of a digital certificate needs to have the public keys of the CA that created the certificates for verifying parameters and the digital signature.

This *PKI* configuration has a basic problem. By assuming that *CAs* are stationary elements, which are created in a given moment and probably grow little by little, every change in the *CA* or every creation of a new CA requires modifying the clients that need to perform a validation (at least knowing their public key). Therefore, when certificates having a short duration or new CAs are required according to the demand of the system, this problem entails an inefficient certificate management and very high costs.

As regards security, *PKIs* have an additional problem because they are not capable of dealing with the new types of attacks that have emerged in the past decade. For example, PKIs do not allow readily detecting when a stolen or falsified certificate is being used in a system. The only way to detect actions of this type when the certificate is actively consulted, which allows revoking it or reporting it to the CA. Therefore, this is an enormous security risk in any computer network.

An additional negative aspect of *PKIs* is the deployment of the infrastructures. This technology cannot be adapted to the different systems existing in an organization which probably does not use current protocols or standards. Accordingly, system connectivity and isolation problems are common.

New trends have arisen in relation to the problem of managing certificates and reducing costs. *Let's Encrypt* technology which generates cryptographic certificates for free on demand is particularly relevant. However, this solution requires the network to have access to the Internet, which makes its use in private networks without access to the Internet, such as a bank organization, for example, impossible.

New proposals are being made to solve *PKI* security problems, such as *HSTS (HTTP Strict Transport Security)* or *HPKP (HTTP Public Key Pinning)* technology which use *SSL* protocol in addition to *PKIs.* However, they are not enough to solve the new attack scenarios that have emerged in recent years.

The following invention proposes a solution to the problems described above by means of a secure, efficient, and flexible method for monitoring, registering, and verifying digital certificates in heterogeneous private networks, particularly in networks not connected to the Internet.

### Description of the Invention

The present invention proposes a solution to the problems described above by means of a computer-implemented method for monitoring digital certificates in a private computer network not connected to the Internet according to claim 1, a system for monitoring, registering, and validating certificates according to claim 13, a computer program according to claim 14, and a computer-readable medium according to claim 15. The dependent claims define preferred embodiments of the invention.

A first inventive aspect provides a *computer-implemented method for monitoring digital certificates in a private computer network not connected to the Internet, wherein the private computer network comprises:*
- *at least one registration server configured for registering said digital certificates, hosting them in a first database based on a Merkle tree, and*
- *at least one monitoring server configured for:*
   ∘ *hosting at least one audit rule,*
   ∘ *applying at least one audit rule on the certificates of the first database of the registration server, and*
   ∘ *issuing an alert if at least one certificate does not comply with said at least one audit rule,*
*wherein at least one audit rule is defined by at least one selected member of the private computer network, and wherein the method comprises the following steps:*
*a) accessing by the at least one monitoring server the first database of the at least one registration server,*
*b) applying by the at least one monitoring server the at least one audit rule on the digital certificates of the first database of the at least one registration server, and*
*c) issuing an alert by the at least one monitoring server if at least one certificate does not comply with said at least one audit rule.*

Throughout this document, *private computer network* will be understood as an intranet located in any local area network, LAN, or the corporate intranet of an organization, entity, or company not connected to the Internet, for example, the private network of a bank organization without access to the Internet for security reasons.

Throughout this document, *audit rule* will be understood as a condition that digital certificates must comply with in order to consider them valid or suitable for use, for example, said certificates having at least two months left before they expire or they not having a certain serial number that has been retired.

Throughout this document, *applying an audit rule* will be understood as the process of checking that the digital certificates comply with said audit rule.

Throughout this document, *database* will be understood as a centralized repository.

Throughout this document, *alert* will be understood as a text message that explains which certificate does not comply with a given audit rule.

Throughout this document, *selected member of the private computer network* will be understood as a member chosen, from all those available members in the private computer network, to be responsible for defining the audit rules and storing them in the monitoring server.

Advantageously, the use of a database based on *a Merkle* tree allows an *append-only* digital certificate registration, i.e., any added certificate cannot be eliminated and it is possible to detect who modified the information contained in the *Merkle* tree and when it was modified. This assures the audit of the system as the connections can be traced in order to identify fraudulent uses of digital certificates.

An additional advantage is the increase in security of the registered digital certificates. That is because the *Merkle* tree is built by means of linked cryptographic *hash* algorithms.

Additionally, appointing a member of the private computer network to create the audit rules advantageously allows making it impossible for a third party to create other rules, or eliminate or modify existing rules without the corresponding authorization.

In a particular embodiment, *the private computer network further comprises at least one certification authority, selected from the private computer network, which is configured for creating and sending the digital certificates to the at least one registration server to be registered by said at least one registration server,*
*wherein the method further comprises the following steps:*
*i. creating by the at least one certification authority at least one digital certificate,*
*ii. assigning by the at least one registration server an identifier to said certificate in order to allow it to be locatable by at least said registration server, and*
*iii. registering the at least one digital certificate created by said at least one certification authority in the at least one registration server, hosting them in its database.*

Advantageously, appointing a member of the private computer network to create the certificates makes it impossible for a third party to try to create certificates without the corresponding authorization, which hinders the creation of fraudulent certificates. Even more advantageously, the need for registering these certificates in the database based on a *Merkle* tree means that it is impossible to interact with digital certificates that are not contained in said database, which prevents the use of expired or revoked certificates, increasing system security.

Additionally, assigning an identifier for each certificate has the advantage of speeding up the search for said certificate in the database.

In a particular embodiment, *the at least one certification authority is configured for creating digital certificates under service.*

Advantageously, the certificates can be created at the request of the different members of the private computer network in a temporary or permanent manner, provided that the authenticity of the certification authority has been checked by means of identifying its IP address and its cryptographic keys.

In a particular embodiment, *when the at least one monitoring server issues an alert, a notification is sent to a recipient of the private computer network predefined in said monitoring server.*

Throughout this document, *recipient of the private computer network* will be understood as a member of the private computer network that has been previously selected and has been given permission to receive alerts in an explicit manner in the monitoring server.

Advantageously, appointing a member of the private computer network to receive alerts makes it impossible for a third party to receive said alerts without the corresponding authorization. This assures that only a member with permissions receives information about certificates susceptible to being considered fraudulent, stolen, expired, or of being revoked, and said member with permissions has absolute authority to decide how to manage the alert; for example, the member can order an expired certificate to be revoked so that any future use is made impossible.

In a particular embodiment, *the at least one monitoring server is furthermore configured for registering both the at least one digital certificate that fails to comply with the audit rule and the corresponding issued alert in a second database based on a Merkle tree.*

Advantageously, the registration of certificates which fail to comply with the audit rules and of their corresponding alerts in a *Merkle tree* complies with the *append-only* property, i.e., a third party eliminating the registration of a certificate that does not comply with the audit rules is made impossible. System security thereby increases by making sure that all the invalid certificates are undoubtedly contained in said database.

In a particular embodiment, *the at least one monitoring server is configured for communicating with the at least one registration server by means of an API.*

Throughout this document, *API* (*Application Programming Interface*) will be understood as a mechanism for connecting two software programs with one another to exchange messages or data in a standard format.

Advantageously, the connection between both servers allows the monitoring server to consult the database of the registration server to enable applying the audit rules and to thereby enable detecting the presence of fraudulent, stolen, revoked, and/or expired certificates. Furthermore, the establishment of the connection by means of an API advantageously prevents the existence of incompatibilities in the exchange of data and information between servers.

In a particular embodiment, *the at least one certification authority is configured for communicating with the at least one registration server by means of an API or by means of an administration web page.*

Throughout this document, *administration web page* will be understood as a web page which only selected members of the private computer network can access to carry out any actions relating to the digital certificates of said private computer network.

Advantageously, the communication between the certification authority and the registration server allows the creation and registration of digital certificates. Even more advantageously, since there are two different communication pathways, it is assured that said communication can be established in the event that one of the pathways is not available.

In a particular embodiment, *the registration server is furthermore configured for hosting at least one validity requirement which is:*
- *related to the information about the digital certificates contained in said registration server, and*
- *defined by at least one selected member of the private computer network.*

Throughout this document, *validity requirement* will be understood as a condition which digital certificates must comply with to be considered valid or suitable for use, for example, they cannot be expired or the digital signature of the requesting party must be correct.

Advantageously, appointing a member of the private network to define the validity requirements makes it impossible for a third party to try to introduce new requirements, or eliminate or modify already existing requirements without the corresponding authorization.

In a particular embodiment, *the registration server is furthermore configured for validating particular digital certificates that have been requested by the private computer network, wherein said method further comprises the steps of:*
*i. receiving by the at least one registration server at least one digital certificate validation request issued by the private computer network,*
*ii. consulting by the at least one registration server if the digital certificate under request is contained in its database, and*
*iii. in the event that the digital certificate under request is contained in the database, consulting by the registration server if it complies with the at least one validity requirement hosted in said registration server, wherein:*
   *a. in the event that it complies, the digital certificate under request is validated, or*
   *b. in the event that it fails to comply, the digital certificate under request is not validated,*
*iv. in the event that the digital certificate under request is not contained in the database, the certificate under request is not validated.*

Throughout this document, *validating a digital certificate* will be understood as giving connection permission to the member of the network requesting said digital certificate validation.

Advantageously, to make the connection of a member to the private computer network possible, two premises must be complied with: the digital certificate must be contained in the registration server, and it must comply with validity requirements, which increases system security. Additionally, the existence of validity requirements entails the advantage that members with expired digital certificates and/or members who have not correctly used the digital signature cannot access the network.

In a particular embodiment, *at least one selected member of the private computer network is configured for communicating with the at least one monitoring server and*/*or with the at least one registration server by means of an API or by means of an administration web page.*

Advantageously, the connection between the selected member of the private computer network and the monitoring server allows the existence of audit rules, and the connection between the selected member of the private computer network and the registration server allows the existence of validity requirements, which makes the detection of expired, stolen, revoked, and/or fraudulent digital certificates possible. Even more advantageously, given the existence of two different communication pathways it is assured that said communication can be established in the event that one of the pathways is not available.

In a particular embodiment, *the registration server further comprises an additional module configured for converting the validation requests issued by the private computer network into a given format, preferably API, such that these requests are understandable for the registration server.*

Throughout this document, *additional module* will be understood as a *VA* (*verification authority*) module which is configured for:
- receiving petitions for a given digital certificate validation protocol, for example *OCSP,*
- communicating said petition to the registration server such that it can understand said petition, and
- transforming the response of the registration server to that same protocol so that the requesting party of the private computer network may understand said response.

Advantageously, the existence of this module allows the private computer network to be heterogeneous, and therefore it is not necessary for all the members of the network to communicate with the same protocol since this module acts like a protocol translator such that all the members of the network may understand one another.

In a particular embodiment, *the administration web page is configured for:*
- *receiving digital certificates from at least one certification authority and sending said certificates to the at least one registration server, and*/*or*
- *receiving at least one validity requirement defined by at least one selected member of the private computer network and sending said validity requirement to the at least one registration server, and*/*or*
- *receiving at least one audit rule defined by at least one selected member of the private computer network and sending said audit rule to the at least one monitoring server.*

Advantageously, the existence of an administration web page allows only authorized users to make changes in the servers through said administration web page. Even more advantageously, the administration web interface allows the certification authority and/or the member or members in charge of defining the audit rules and/or the validity requirements to operate in a quick, direct, and effective manner.

In a second inventive aspect, the invention provides a *system for monitoring, registering, and validating digital certificates comprising means for carrying out the steps of the method described in the first inventive aspect.*

In a third inventive aspect, the invention provides a *computer program comprising instructions which, when the program is executed by a computer, caused said computer to carry out the steps of the method described in the first inventive aspect.*

In a fourth inventive aspect, the invention provides a *computer-readable medium comprising instructions which, when executed by a computer, caused said computer to carry out the steps of the method described in the first inventive aspect.*

All the features and/or steps of methods described in this specification (including the claims, description, and drawings) can be combined in any combination, with the exception of combinations of mutually exclusive features.

### Description of the Drawings

These and other features and advantages of the invention will become clearer from the following detailed description of a preferred embodiment, given only by way of illustrative and nonlimiting example, in reference to the attached drawings.
Figure 1 shows a flow chart of the method for monitoring, registering, and validating digital certificates according to an embodiment of the present invention.
Figure 2 shows the architecture of the private computer network of the method for monitoring, registering, and validating digital certificates according to an embodiment of the present invention.

### Detailed Description of the Invention

The present invention describes a computer-implemented method (100) for monitoring (200), registering (300), and validating (400) digital certificates in a private computer network (1) not connected to the Internet.

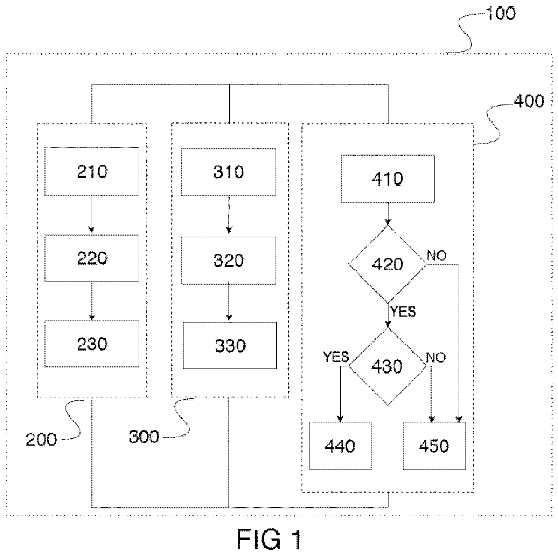

Figure 1 shows a flow chart of a particular embodiment of the method (100) in which the phases of monitoring (200), registering (300), and validating (400) digital certificates can be performed simultaneously. Both registering (300) and validating (400) digital certificates are performed on demand of the members of the private computer network (1) whereas the phase of monitoring (200) is a periodic process with a frequency defined by a selected member (8) of the private computer network (1) .

The phase of registering (300) digital certificates comprises the following steps:
- the at least one certification authority (7) creating (310) at least one digital certificate,
- the at least one registration server (2) assigning (320) an identifier to said digital certificate to allow it to be locatable by at least said registration server (2), and
- registering (330) the at least one digital certificate created by said at least one certification authority (7) in the at least one registration server (2), hosting them in its database (4).

The database (4) of the registration server (2) based on a *Merkle tree* gradually fills up as petitions for creating digital certificates are received. To that end, a certification authority (7) creates (310) the digital certificate and assigns (320) it a specific identifier according to the position of the *Merkle tree* in which said digital certificate is going to be registered, for the purpose of being readily locatable in the *Merkle tree.* Finally, the registration server (2) registers (330) the digital certificate in the *Merkle tree* of its database (4) .

The phase of validating (400) of the method comprises the following steps:
- the at least one registration server (2) receiving (410) at least one certificate validation request issued by the private computer network (1),
- the at least one registration server (2) consulting (420) if the digital certificate under request is contained in its database (4), and
- in the event that the digital certificate under request is contained in the database (4), the registration server (2) consulting (430) if it complies with the at least one validity requirement (9) hosted in said registration server (2), wherein:
   ∘ in the event that it complies, the digital certificate under request is validated (440), or
   ∘ in the event that it fails to comply, the digital certificate under request is not validated (450),
- in the event that the digital certificate under request is not contained in the database (4), the certificate under request is not validated (450).

From the time the database (4) of the at least one registration server (2) starts to be created, said registration server (2) can start to receive digital certificate validation petitions. First, the at least one registration server (2) receives (410) a digital certificate validation request from a member of the private computer network (1); then the registration server (2) consults (420) if the digital certificate is registered in its database (4). In the event that it is registered, it then checks if the certificate complies with the validity requirements (9) stored in the registration server (2), such that if the digital certificate complies with the validity requirements (9), the digital certificate is validated (440), but if it does not comply with said validity requirements (9), the certificate is not validated (450). In the event that it is not registered in the database (4), the digital certificate is not validated (450) in that case either.

In a particular example of this embodiment, when a digital certificate is not validated (450) an error message is produced, and if the digital certificate is validated (440), the party requesting the validation obtains permission to access the network.

In another particular example of this embodiment, the validity requirements (9) comprise checking the expiration date of the digital certificate and verifying the digital signature of the party requesting validation.

The phase of monitoring (200) of the method comprises the following steps:
a) the at least one monitoring server (3) accessing (210) the first database (4) of the at least one registration server (2),
b) the at least one monitoring server (3) applying (220) the at least one audit rule (6) on the digital certificates of the first database (4) of the at least one registration server (2), and
c) the at least one monitoring server (3) issuing (230) an alert if at least one digital certificate does not comply with said at least one audit rule (6).

From the time the database (4) of the registration server (2) starts to be created, the phase of monitoring (200) on the digital certificates contained in said database (4) can start to run. First, the monitoring server (3) accesses (210) the database (4) of the registration server (2) for applying (220) on them the audit rules (6) which are contained in the monitoring server (3) itself. In the event that a digital certificate fails to comply with an audit rule (6), the monitoring server (3) issues (230) an alert notifying of this situation.

In a particular example of this embodiment, the audit rules (6) comprise:
- verifying that there are no certificates with a given serial number;
- verifying that there are no certificates using certain cryptographic algorithms;
- verifying that there are not more than a given number of certificates issued for a specific use, such as for accessing a given corporate network, and/or
- warning about the certificates that will expire in less than two months,
where said the audit rules (6) can be provided separately, in combinations of two, in combinations of three, or all of them combined together.

In another particular example of this embodiment, the alert is a text message issued to a member of the private computer network (1) that has been previously selected, said member of the private computer network (1) having the authority to decide how to manage the certificate, for example, revoking it, marking it as expired, notifying that it is fraudulent, and/or exposing its susceptibility to having been stolen.

In another particular example of this embodiment, the frequency at which the phase of monitoring (200) is applied ranges from one minute up to at least one day.

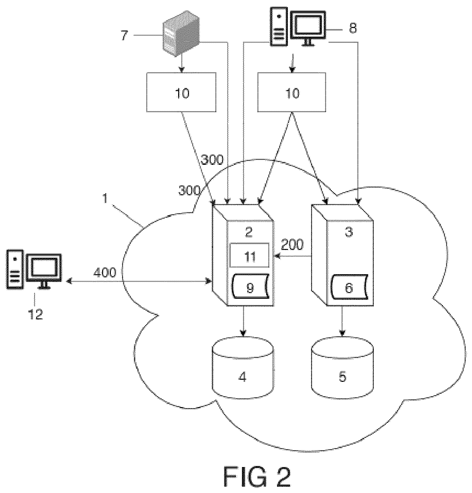

Figure 2 shows the architecture of the private computer network (1) where the phases of monitoring (200), registering (300), and validating (400) digital certificates of a particular embodiment of the invention are applied.

In this embodiment, there is a registration server (2) with a non-relational database (4) based on a *Merkle tree,* and a monitoring server (3) with a non-relational database (5) also based on a *Merkle tree,* with both servers being located in the private computer network (1) not connected to the Internet.

Furthermore, a selected member (8) of the private computer network (1) is appointed and configured for designing
- audit rules (6) that will be hosted in the monitoring server (3), and
- validity requirements (9) that will be hosted in the registration server (2).

Said selected member (8) of the private computer network (1) can be connected with both servers directly by means of an API or through an administration web page (10).

A certification authority (7) capable of creating digital certificates to be registered (300) in the registration server (2) is also appointed. Said certification authority (7) can be connected with the registration server directly by means of an API or through an administration web page (10).

Additionally, when a member of the private computer network (12) requests the validation of a digital certificate (400) from the registration server (2), the registration server (2) checks if said digital certificate under request is located in its database (4), and in such case it checks if the digital certificate complies with the validity requirements (9) hosted in the registration server (9). It must comply with both premises in order for the member of the private computer network (12) to receive authorization to connect to the network.

The member of the private computer network (12) can request the validation of a digital certificate (400) by means of an API or by means of a different validation protocol, such as an *OCSP,* for example. In the second case, the *verification authority* module (11) of the registration server (2) translates the different protocol into the *API* so that the member of the private computer network (12) may communicate with the registration server (2).

Furthermore, the monitoring server (3) periodically monitors (200) the digital certificates contained in the database (4) of the registration server (2) in order to check if they comply with the audit rules (6) contained in said monitoring server (3). The communication between both servers is preferably performed via API. In the event that a certificate fails to comply with one of the audit rules (6), an alert is issued to the member of the private computer network (1) appointed for that purpose, and both the digital certificate and the corresponding alert generated are registered in the database (5) of the monitoring server (3).

In a particular example of this embodiment, the technologies used in the architecture are:
- *Python* as code for developing the different operations,
- *AngularJS, HTML,* and *CSS* as code for developing the administration web page,
- *Mongodb* for non-relational databases,
- *Flask* for both servers
where said technologies can be provided separately, in combinations of two, in combinations of three, or all of them combined together.

## Claims

1. A computer-implemented method (100) for monitoring (200) digital certificates in a private computer network (1) not connected to the Internet, wherein the private computer network (1) comprises:
• at least one registration server (2) configured for registering said digital certificates, hosting them in a first database (4) based on a Merkle tree, and
• at least one monitoring server (3) configured for:
∘ hosting at least one audit rule (6),
∘ applying at least one audit rule (6) on the digital certificates of the first database (4) of the registration server (2), and
∘ issuing an alert if at least one certificate does not comply with said at least one audit rule (6),
wherein at least one audit rule (6) is defined by at least one selected member (8) of the private computer network (1), and wherein the method (100) comprises the following steps:
a)accessing (210) by the at least one monitoring server (3) the first database (4) of the at least one registration server (2),
b)applying (220) by the at least one monitoring server (3) the at least one audit rule (6) on the digital certificates of the first database (4) of the at least one registration server (2), and
c) issuing (230) an alert by the at least one monitoring server (3) if at least one digital certificate does not comply with said at least one audit rule (6).

2. The method (100) according to the preceding claim, wherein the private computer network (1) further comprises at least one certification authority (7), selected from the private computer network (1), which is configured for creating and sending the digital certificates to the at least one registration server (2) to be registered (300) by said at least one registration server (2),
wherein the method (100) further comprises the following steps:
i. creating (310) by the at least one certification authority (7) at least one digital certificate,
ii. assigning (320) by the at least one registration server (2) an identifier to said digital certificate to allow it to be locatable by at least said registration server (2), and
iii. registering (330) the at least one digital certificate created by said at least one certification authority (7) in the at least one registration server (2), hosting them in its database (4).

3. The method (100) according to the preceding claim, wherein the at least one certification authority (7) is configured for creating digital certificates under service.

4. The method (100) according to any of the preceding claims, wherein when the at least one monitoring server (3) issues (230) an alert, a notification is sent to a recipient of the private computer network (1) predefined in said monitoring server (3).

5. The method (100) according to any of the preceding claims, wherein the at least one monitoring server (3) is furthermore configured for registering both the at least one digital certificate that fails to comply with the audit rule (6) and the corresponding issued alert in a second database (5) based on a Merkle tree.

6. The method (100) according to any of the preceding claims, wherein the at least one monitoring server (3) is configured for communicating with the at least one registration server (2) by means of an API.

7. The method (100) according to any of the preceding claims 2 to 6, wherein the at least one certification authority (7) is configured for communicating with the at least one registration server (2) by means of an API or by means of an administration web page (10).

8. The method (100) according to any of the preceding claims, wherein the registration server (2) is furthermore configured for hosting at least one validity requirement (9) which is:
• related to the information about the digital certificates contained in said registration server (2), and
• defined by at least one selected member (8) of the private computer network (1).

9. The method (100) according to the preceding claim, wherein the registration server (2) is furthermore configured for validating (400) particular digital certificates that have been requested by the private computer network (1),
wherein said method (100) further comprises the steps of:
i. receiving (410) by the at least one registration server (2) at least one digital certificate validation request issued by the private computer network (1),
ii. consulting (420) by the at least one registration server (2) if the digital certificate under request is contained in its database (4), and
iii. in the event that the digital certificate under request is contained in the database (4), consulting (430) by the registration server (2) if it complies with the at least one validity requirement (9) hosted in said registration server (2), wherein:
a. in the event that it complies, the digital certificate under request is validated (440), or
b. in the event that it fails to comply, the digital certificate under request is not validated (450),
iv. in the event that the digital certificate under request is not contained in the database (4), the certificate under request is not validated (450).

10. The method (100) according to any of the preceding claims, wherein at least one selected member (8) of the private computer network (1) is configured for communicating with the at least one monitoring server (3) and/or with the at least one registration server (2) by means of an API or by means of an administration web page (10).

11. The method (100) according to the preceding claim, wherein the registration server (2) further comprises an additional module (11) configured for converting the validation requests issued by the private computer network (1) into a given format, preferably API, such that these requests are understandable for the registration server (2).

12. The method according to any of claims 7 to 11, wherein the administration web page (10) is configured for:
• receiving digital certificates from at least one certification authority (7) and sending said certificates to the at least one registration server (2), and/or
• receiving at least one validity requirement (9) defined by at least one selected member (8) of the private computer network (1) and sending said validity requirement (9) to the at least one registration server (2), and/or
• receiving at least one audit rule (6) defined by at least one selected member (8) of the private computer network (1) and sending said audit rule (6) to the at least one monitoring server (3).

13. A system for monitoring (200), registering (300), and validating (400) digital certificates comprising means for carrying out the steps of the method according to any of the preceding claims.

14. A computer program comprising instructions whereby when the program is run by a computer, said computer is made to carry out the steps of the method according to any of claims 1 to 12.

15. A computer-readable medium comprising instructions whereby when said instructions are run by a computer, said computer is made to carry out the steps of the method according to claims 1 to 12.
